# EUROPÄISCHE PATENTANMELDUNG

(11) **EP 0 828 389 A2**
(43) Veröffentlichungstag der Anmeldung: **11.03.1998**
(21) Anmeldenummer: 97402008.3
(22) Anmeldetag: 27.08.1997
(51) Int. Cl.: H04N 7/10

(54) **Einrichtung zur Anbindung einer Türsprechanlage mit Videokamera an ein diensteintegrierendes digitales Netz**

(30) Priorität: 28.08.1996 DE 19634778
(71) Anmelder: ALCATEL ALSTHOM COMPAGNIE GENERALE D'ELECTRICITE, 75008 Paris (FR)
(72) Erfinder: Peters, Wolfgang, 71732 Tamm (DE); Schneider, Gerhard, 71229 Leonberg (DE)
(74) Vertreter: Schätzle, Albin, Dipl.-Phys.

(57) **Zusammenfassung**

Eine Telefonanlage mit Videokamera ist über eine Einrichtung ( EIN ) mit einem diensteintegrierenden digitalen Netz (ISDN) verbunden. Die Einrichtung (EIN) beinhaltet dazu beispielsweise eine Audioeinheit ( AUD1 ) zur Ankopplung der Audiosignale der Türsprechanlage ans digitale Netz ( ISDN ), eine Videoeinheit (VID1) zur Ankopplung der Videosignale der Videokamera ans digitale Netz (ISDN), eine Steuereinheit (CTRL) zur Übertragung eines Anforderungssignals zum Aufbau einer Wählverbindung zur Übertragung der Video- und Audiosignale über das digitale Netz ( ISDN ) im Falle einer Betätigung der Türsprechanlage sowie zum Empfang von Steuersignalen und zur Übertragung der Steuersignale ohne Unterbrechung der Wählverbindung an wenigstens eine fernsteuerbare Einheit (UNIT) und ein ISDN-Bildtelefon mit einprogrammierter Rufumleitung. Ein Wohnunginhaber kann von seinem ISDN-Bildtelefon aus einen Besucher seiner Wohnung mittels Videobild identifizieren und über Steuersignale ohne Unterbrechung der Wählverbindung beispielsweise den Türöffner betätigen und auf eine zweite Videokamera und eine zweite Freisprecheinrichtung im Wohnungsinnern umschalten und auf diese Weise den Besucher auch nach dem Betreten seiner Wohnung kontrollieren oder mit ihm via ISDN-Bildtelefon kommunizieren.

## Beschreibung

Die Erfindung betrifft eine Einrichtung zur Anbindung einer Türsprechanlage mit Videokamera an ein diensteintegrierendes digitales Netz gemäß Patentanspruch 1.

Aus DE 4127316 ist ein Verfahren zum automatischen Aufbauen einer Fernsprechverbindung von einer Türsprechstation über einen Fernsprechapparat oder eine Fernsprechanlage bekannt. Dazu ist ein Aktivierungsschalter mit einer Zieltaste des Fernsprechapparates und mit dem Türklingelkontakt der Türsprechstation verbunden. Bei Betätigen des Türklingelkontakts durch einen Besucher wird automatisch eine Fernsprechverbindung zu der auf der Zieltaste vorprogrammierten Rufnummer, z.B. die Rufnummer des Büros, in dem sich der Wohnunginhaber tagsüber aufhält, durchgeführt. Durch Senden eines tonfrequenten Signals von der angewählten Rufnummer aus wird nach Abbau der Fernsprechverbindung der Türöffner betätigt. Die Kommunikation zwischen dem Besucher und dem Wohnungsinhaber ist aufgrund der Fernsprechverbindung auf verbale Äußerungen und Identifikation beschränkt. Nachdem der Türöffner betätigt wurde besteht für den Wohnungsinhaber keine Möglichkeit der Kontrolle mehr, z.B. ob die Tür nach Beendigung eines Auftrags wieder geschlossen wurde oder ein Auftrag richtig ausgeführt wurde; beispielsweise wenn es sich bei dem Besucher um einen Postboten handelt, der ein Paket in der Wohnung deponieren soll.

Es ist deshalb eine Aufgabe der Erfindung, einem Wohnungsinhaber eine technisch bessere Möglichkeit der telemetrischen Identifikation eines Besuchers seiner Wohnung zur Verfügung zu stellen.

Diese Aufgabe wird durch die Lehre des Patentanspruchs 1 gelöst. Vorteilhafte Ausgestaltungen sind den abhängigen Patentansprüchen 2 bis 11 zu entnehmen.

Ein besonderer Vorteil der Erfindung ist, daß ein neues Leistungsmerkmal für Bildtelefone generiert wird, das die Funktionalität und den Einsatz von Bildtelefonen sowie ihren Verkauf fördert.

Ein weiterer Vorteil der Erfindung ist, daß nur geringe Änderungen an bestehenden Einrichtungen, beispielsweise an der Türsprechanlage oder am Bildtelefon erforderlich sind, um die Anbindung der Türsprechanlage mit Videokamera an ein diensteintegrierendes digitales Netz zu realisieren.

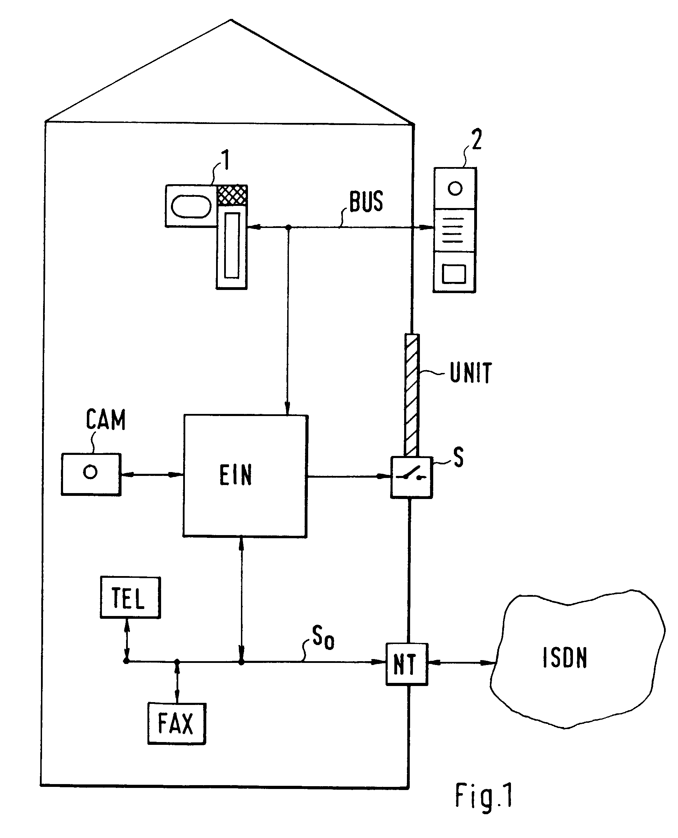

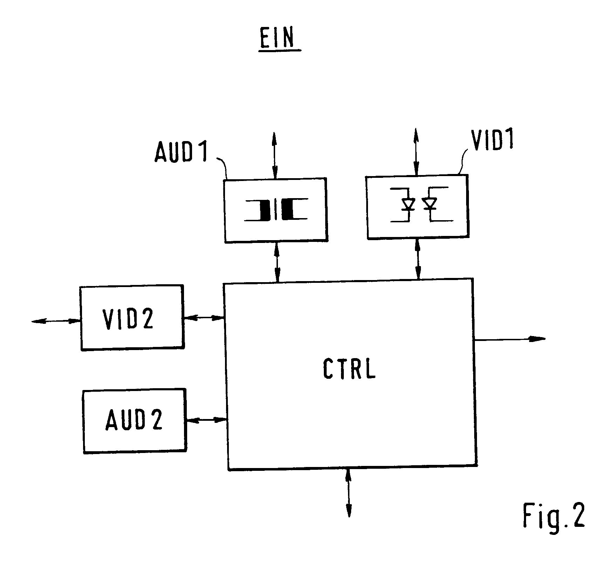

Im folgenden wird die Erfindung anhand eines Ausführungsbeispiels unter Zuhilfenahme der Figuren 1 und 2 erläutert. Es zeigen:
- Fig. 1: eine schematische Darstellung des Einsatzes einer erfindungsgemäßen Einrichtung zur Anbindung einer Türsprechanlage mit Videokamera an ein diensteintegrierendes digitales Netz in einer Wohnung und
- Fig. 2: einen schematisch dargestellten Aufbau der erfindungsgemäßen Einrichtung aus Fig.1 .

Das Ausführungsbeispiel wird zunächst unter Zuhilfenahme der Fig. 1 erläutert. Fig. 1 zeigt eine erfindungsgemäße Einrichtung EIN, die mit einer Türsprechanlage mit Videokamera und einem diensteintegrierenden digitalen Netz, dem sog. ISDN verbunden ist.

Die Türsprechanlage beinhaltet eine Einheit 1, die im Innenraum einer Wohnung angeordnet ist, eine Einheit 2, die im Außenbereich der Wohnung angeordnet ist, und einem internen Bus BUS zum Verbinden der Einheiten 1 und 2.

Die Einheit 1 enthält einen Bildschirm und einen Telefonhörer sowie eine Steuereinheit und eine Türklingel. Die Einheit 2 enthält eine Videokamera, eine Lautsprecheinrichtung sowie einen Türklingelkontakt und eine Steuereinheit.
Betätigt ein Besucher den Türklingelkontakt, so wird ein Signal über den internen Bus BUS zur Türklingel übertragen. Wird der Telefonhörer abgenommen, so wird über die Steuereinheiten der Bildschirm, die Videokamera und die Lautsprecheinrichtung aktiviert, so daß auf dem Bildschirm in der Wohnung das aufgenommene Videobild des Besuchers sichtbar wird und die Person am Telefonhörer mit dem Besucher kommunizieren kann.

Der interne Bus BUS ist zusätzlich mit der Einrichtung EIN zur Anbindung der Türsprechanlage mit Videokamera ans diensteintegrierende digitale Netz verbunden. Wird bei Betätigen des Türklingelkontakts der Telefonhörer nicht abgenommen, z.B. nach einer in der Einrichtung EIN programmierten Zeitspanne, so wird, z.B. ausgelöst durch ein Signal, das in der Steuereinheit der Einheit 1 generiert und über den internen Bus BUS zur Einheit EIN übertragen wird, sowie mittels einer zuvor in der Einrichtung EIN programmierten Rufnummer eine Wählverbindung über das diensteintegrierende digitale Netz aufgebaut.

Die Einrichtung EIN ist dazu über einen S₀-Bus S₀ und eine Netzabschlußeinheit NT mit dem ISDN verbunden. Mit dem S₀-Bus S₀ sind weiterhin beispielsweise ein ISDN-Telefon TEL und ein Telefaxgerät FAX verbunden. Die Netzabschlußeinheit NT ist beispielsweise zur Übertragung von zwei Nutzinformationskanälen und einem Signalisierungskanal geeignet. Die Nutzinformationskanäle sind die sog. B-Kanäle mit jeweils 64 kBit/s Übertragungskapazität. Der Signalisierungskanal ist der sog. D-Kanal mit 16 kBit/s Übertragungskapazität. Die Konfiguration der Netzabschlußeinheit NT entspricht damit der Basisanschlußkonfiguration im ISDN.

Die Einrichtung EIN ist ferner mit einer Videokamera CAM und einer Steuerung S für eine fernsteuerbare Einheit UNIT verbunden. Die fernsteuerbare Einheit UNIT ist beispielsweise ein Türöffner, ein Rolladen, ein Garagentor oder eine Videokamera.

Beim Betätigen des Türklingelkontakts der Türsprechanlage wird, wenn der Telefonhörer nicht abgenommen wird, von der Einrichtung EIN eine Wählverbindung zu einem Bildtelefon aufgebaut, dessen Rufnummer der Wohnungsinhaber zuvor programmiert hat; beispielsweise zum Bildtelefon im Büro des Wohnungsinhabers, in dem er sich tagsüber aufhält. Wird der Telefonhörer des Bildtelefons abgenommen, so aktiviert die Steuereinheit der Einheit 2 die Videokamera und die Lautsprecheinrichtung, woraufhin auf dem Bildschirm des Bildtelefons im Büro des Wohnungsinhabers das aufgenommene Videobild des Besuchers sichtbar wird und die Person am Bildtelefon, in der Regel der Wohnungsinhaber selbst, mit dem Besucher kommunizieren kann. Der Wohnungsinhaber kann, z.B. nachdem er den Besucher anhand des Videobildes indentifiziert hat, über ein im Signalisierungskanal des ISDN übertragenes Steuersignal ohne Unterbrechung der Wählverbindung den Türöffner betätigen, so daß der Besucher in die Wohnung eintreten kann, wenn dies gewünscht ist. Bei dem Besucher handelt es sich beispielsweise um ein Kind des Wohnungsinhaber, das noch keinen eigenen Wohnungsschlüssel besitzt und von der Schule kommt, während der Wohnungsinhaber noch im Büro ist. Oder der Besucher ist beispielsweise ein Postbote, der ein Paket bringt und das Paket in der Wohnung deponieren soll.

Zur Überwachung, ob die Ansteuerung der fernsteuerbaren Einheit UNIT auch wie gewünscht erfolgt ist, bleibt die Wählverbindung aufrechterhalten. Beispielsweise ist auch die Videokamera der Türsprechanlage fernsteuerbar, so daß der Wohnungsinhaber den Besucher während der Videokommunikation mittig auf die Videobilder fixieren kann. Des weiteren kann über ein weiteres im Signalisierungskanal übertragenes Steuersignal durch die Einrichtung EIN ohne Unterbrechung der Wählverbindung von der Videokamera der Türsprechanlage auf die Videokamera CAM umgeschaltet werden. Die Videokamera CAM befindet sich in der Wohnung, wodurch es dem Wohnungsinhaber am Bildtelefon in seinem Büro möglich ist den Besucher auch nach Einlaß in die Wohnung zu beobachten; beispielsweise den Postboten, ob dieser die Wohnungstür nach Ablage des Pakets wieder verschließt und nichts entwendet. Die Wählverbindung wird beendet durch das Auflegen des Telefonhörers des Bildtelefons.

Das Ausführungsbeispiel wird nun weiter unter Zuhilfenahme von Fig. 2 erläutert. Fig. 2 zeigt einen schematisch dargestellten Aufbau der erfindungsgemäßen Einrichtung EIN aus Fig.1. Die Einrichtung EIN beinhaltet eine Audioeinheit AUD1 zur Ankopplung der Audiosignale der Lautsprecheinrichtung der Türsprechanlage ans ISDN, eine Videoeinheit VID1 zur Ankopplung der Videosignale der Videokamera der Türsprechanlage ans ISDN und eine Steuereinheit CTRL zur Übertragung eines Anforderungssignals zum Aufbau einer Wählverbindung zur Übertragung der Video- und Audiosignale übers ISDN im Falle einer Betätigung der Türsprechanlage. Die Steuereinheit CTRL dient des weiteren zum Empfang von Steuersignalen und zur Übertragung der Steuersignale ohne Unterbrechung der Wählverbindung an wenigstens eine fernsteuerbare Einheit UNIT.

Die Ankopplung der Audio- und Videosignale ans ISDN und die Ankopplung der Audiosignale aus dem ISDN an den internen Bus BUS ist aufgrund der unterschiedlichen Protokolle und Potentiale nicht mit einer direkten Verbindung möglich. Die Audioeinheit AUD1 beinhaltet deshalb zur Potentialtrennung zwei Übertrager und zur Protokollumsetzung eine Umsetzeinheit. Die Videoeinheit VID1 beinhaltet zur Potentialtrennung einen Opto-Koppler und zur Protokollumsetzung eine Umsetzeinheit. Der Opto-Koppler ist zur Übertragung hoher Bitraten geeignet und deshalb insbesondere für die Übertragung von Videosignalen geeignet, die eine höhere Bitrate als die Audiosignale haben.

Die Steuereinheit CTRL beinhaltet einen Speicher zum Abspeichern von Videobildern und einen Vergleicher zum Vergleich der abgespeicherten Videobilder mit den Videosignalen der Videokamera sowie ein ISDN-Bildtelefon oder einen Computer mit ISDN-PC-Adapterkarte. Beispielsweise können in dem Speicher einzelne Videobilder von dem Wohnungsinhaber bekannten Personen abgespeichert werden. Dies erfolgt beispielsweise dadurch, daß die betreffende Person während einer Programmierungsphase die Türsprechanlage betätigt und das von der Videokamera aufgenommene Videobild im Speicher abgespeichert wird. Die Programmierungsphase ist an der Steuereinheit CTRL einstellbar. Die Steuereinheit CTRL beinhaltet dazu beispielsweise einen Mikroprozessor oder einen digitalen Signalprozessor und eine Tastatur, an der ein Programmierungscode einzugeben ist. So kann beispielsweise das Videobild des Kindes des Wohnungsinhabers, eines oder mehrerer Nachbarn oder des Postboten abgespeichert werden. Betätigt nun ein Besucher die Türsprechanlage, so wird vor dem Aufbau einer Wählverbindung zunächst das aktuelle Videobild des Besuchers mit den abgespeicherten Videobildern verglichen. Abhängig von der Programmierung des Wohnungsinhabers wird ein Anforderungssigal zum Aufbau einer Wählverbindung nur dann zum ISDN-Bildtelefon oder zum Computer übertragen, wenn beispielsweise eine Übereinstimmung des aktuellen Videobildes des Besuchers mit einem abgespeicherten Videobild vorliegt. Das ISDN-Bildtelefon oder der Computer bauen also nur dann eine Wählverbindung zu einer zuvor programmierten Rufnummer auf, wenn beispielsweise das Kind des Wohnunginhabers oder ein Nachbar die Türsprechanlage betätigt; eine Wählverbindung wird nicht aufgebaut, wenn eine dem Wohnungsinhaber unbekannte Person die Türsprechanlage betätigt, z.B. ein Vertreter.

Anstelle oder zusätzlich zum Vergleich des Videobildes des Besuchers mit abgespeicherten Videobildern, können auch Audiosignale abgespeichert und verglichen werden. Die Steuereinheit CTRL beinhaltet dazu einen Speicher zum Abspeichern von Audiosignalen und einen Vergleicher zum Vergleich der abgespeicherten Audiosignale mit den Audiosignalen von der Türsprechanlage. Ein Anforderungssigal zum Aufbau einer Wählverbindung wird nur in Abhängigkeit vom Vergleich zum ISDN-Bildtelefon oder zum Computer übertragen. Betätigt beispielsweise das Kind des Wohnungsinhabers die Türsprechanlage, so kann das Kind durch Nennung seines Namens eine Wählverbindung auslösen, wenn der Name zuvor in einer Programmierungsphase im Speicher abgespeichert wurde.

Die Einrichtung EIN beinhaltet des weiteren eine zweite Videoeinheit VID2 zur Verbindung mit einer zweiten Videokamera CAM. Die zweite Videokamera CAM befindet sich innerhalb der Wohnung des Wohnungsinhabers und dient dazu den Innenbereich der Wohnung und insbesondere die Wohnungstür zu überwachen. Die zweite Videokamera CAM wird durch die Steuereinheit CTRL und über die Videoeinheit VID2 aktiviert und ist zusätzlich auch fernsteuerbar. Hat der Wohnungsinhaber durch ein im Signalisierungskanal übertragenes Steuersignal den Türöffner betätigt, so kann er durch ein weiteres Steuersignal von der Videokamera der Türsprechanlage auf die zweite Videokamera CAM umschalten, um beispielsweise zu überwachen, ob die Wohnungstür geöffnet ist. Die Steuereinheit CTRL beinhaltet dazu einen Umschalter zum Umschalten von der Übertragung der Videosignale von der ersten Videokamera der Türsprechanlage auf die Übertragung der Videosignale von der zweiten Videokamera CAM ohne Unterbrechung der Wählverbindung. Der Umschalter reagiert auf das zweite Steuersignal. Der Umschalter kann auch so ausgelegt sein, daß er bei erneutem Senden des zweiten Steuersignals wieder auf die erste Videokamera umschaltet, so daß mehrmals zwischen den beiden Videokameras umgeschaltet werden kann. Die Videoeinheit VID2 beinhaltet vergleichbar zur Videoeinheit VID1 einen Opto-Koppler und einen Protokollumsetzer.

Die Einrichtung EIN beinhaltet ferner eine zweite Audioeinheit AUD2 zur Verbindung mit einer nicht dargestellten zweiten Freisprecheinrichtung und einen Umschalter zum Umschalten von der Übertragung der Audiosignale von der Freisprecheinrichtung der Türsprechanlage auf die Übertragung der Audiosignale von der zweiten Freisprecheinrichtung ohne Unterbrechung der Wählverbindung. Der Aufbau der zweiten Audioeinheit AUD2 ist vergleichbar dem Aufbau der Audioeinheit AUD1, der Aufbau des Umschalter vergleichbar dem des Umschalter für die Videokameras. Anstelle der Überwachung des Innenbereichs der Wohnung mittels der zweiten Videokamera oder zusätzlich zu dieser Überwachung kann der Wohnungsinhaber über ein Steuersignal im Signalisierungskanal, das den Umschalter aktiviert, das mit dem Besucher begonnene Gespräch über die zweite Freisprecheinrichtung in der Wohnung fortführen. Die Audio- und Videosignale der Türsprecheinrichtung können auch über Steuersignale des Wohnungsinhabers zum ISDN-Bildtelefon umgeleitet werden, so daß der Besucher, z.B. das Kind, nach Eintritt in die Wohnung mit dem Wohnunginhaber via ISDN-Bildtelefon kommunizieren kann. Die Steuersignale müssen im Mikroprozessor oder im digitalen Signalprozessor zuvor einprogrammiert und abgespeichertr werden. Als mögliche Steuersignale stehen beispielsweise die Numern der Tastatur des ISDN-Bildtelefons zur Verfügung. Eine beispielhafte Aufteilung ist: Nr.1 bedeutet Türöffner betätigen, Nr. 2 Umschalten von Videokamera 1 auf 2 und vice versa, Nr. 3 Umschalten von Freisprecheinrichtung 1 auf 2 und vice versa, Nr. 4 Umschalten von der Türsprechanlage auf das ISDN-Bildtelefon.

Die Steuereinheit CTRL beinhaltet außerdem einen programmierbaren Speicher zum programmierbaren Abspeichern von wenigstens einer Rufnummer, die im Falle einer Betätigung der Türsprechanlage automatisch anwählbar ist. Die Rufnummer wird beispielsweise im ISDN-Bildtelefon als Rufumleitung eingegeben. Die Rufnummer kann entweder am ISDN-Bildtelefon selbst oder telemetrisch über eine Wählverbindung und Steuersignale im Signalisierungskanal eingegeben werden; beispielsweise dient die Nr. 5 der Tastatur des benutzten Telefons zum Übergang in die Programmierung der Rufnummer, die daran anschließend über die Tastatur eingegeben wird. Die Programmierung wird beispielsweise durch die Nr.-Folge 000 beendet. Das ISDN-Bildtelefon kann zur Programmierung der Rufnummer der Rufumleitung allerdings nur von Telefonen mit vorgegebenen Rufnummern aus angerufen werden. Die Steuereinheit CTRL beinhaltet dazu ein Rufnummernfilter, in das die gewünschten Rufnummern zuvor einprogrammiert werden. Das Rufnummernfilter berechtigt nur über Wählverbindungen, die von den vorgegebenen Rufnummern aus aufgebaut werden, Video- und/oder Audiosignale abzurufen, Steuersignale an die wenigstens eine fernsteuerbare Einheit UNIT weiterzuleiten und/oder die Rufnummer der Rufumleitung zu programmieren. Der Wohnungsinhaber kann somit auch ohne ein Betätigen der Türsprechanlage durch einen Besucher z.B. zum Zwecke der Überwachung sein eigenes ISDN-Bildtelefon anrufen und über die Einrichtung EIN die Videosignale der Türsprecheinrichtung oder der zweiten Videokamera und oder die Audiosignale der Türsprechanlage oder der zwieten Freisprecheinrichtung abrufen. Des weiteren ist es ihm möglich die fernsteurberen Einheiten zu bedienen, z.B. den Rolladen, um, während er sich beispielsweise im Urlaub befindet, seine Anwesentheit zu simulieren.

Über eine Wählverbindung können nach dem oben gesagtem somit die Video- und Audiosignale von der Einrichtung EIN zu einem ISDN-Telefon, dessen Rufnummer zuvor in der Einrichtung EIN entweder als Rufumleitung und/oder im Rufnummernfilter programmiert wurde übertragen und Video- und Audiosignale von der Einrichtung EIN empfangen werden. Die Übertragung der Video- und Audiosignale erfolgt in wenigstens einem Nutzinformationskanal, vorzugsweise in zwei B-Kanälen des ISDN. Zusätzlich können Personen von berechtigten Rufnummern aus eine Wählverbindung zur Einrichtung EIN Steuersignale in einem Signalisierungskanal übertragen. Die Einrichtung EIN kann ferner über den Mikroprozessor so programmiert werden, das der Wohnungsinhaber, z.B. durch Drücken einer der Nummern 6,7 oder 8 der Tastatur des benutzten und berechtigten Telefons die Videoaufnahme des Besuchers und/oder das Gespräch mit dem Besucher in einem Speicher der Einrichtung EIN abspeichern kann; z.B. Nr. 6 für Video, Nr. 7 für Audio und Nr. 8 für Video und Audio. Der Mikroprozessor kann alternativ oder zusätzlich auch so programmiert werden, daß bei einem gescheiterten Versuch des Aufbaus einer Wählverbindung zur programmierten Rufnummer, z.B. bei Nichtabheben des Wohnungsinhaber aufgrund vorübergehender Nichtanwesenheit unter der programmierten Rufnummer, die Einrichtung EIN für eine vogegebene Zeitspanne, beispielsweise 30 Sekunden Video- und Audiosignale des Besuchers aufnimmt und abspeichert, um dem Wohnungsinhaber Gelegenheit zu geben zu kontrollieren, ob in seiner Anwesenheit seine Türanlage betätigt wurde. Der Abruf der abgespeicherten Signale kann durch den Wohnungsinhaber vergleichbar zum Anrufbeantworter beim Telefon z.B. am ISDN-Bildtelefon selbst nach seiner Rückkehr in seine Wohnung oder durch Fernabfrage über eine Wählverbindung und beispielsweise die Nr. 9 der Tastatur des benutzten Telefons erfolgen.

## Patentansprüche

1. Einrichtung ( EIN ) zur Anbindung einer Türsprechanlage mit Videokamera an ein diensteintegrierendes digitales Netz ( ISDN ), mit
- einer Audioeinheit ( AUD1 ) zur Ankopplung der Audiosignale der Türsprechanlage ans digitale Netz ( ISDN ),
- einer Videoeinheit ( VID1 ) zur Ankopplung der Videosignale der Videokamera ans digitale Netz ( ISDN ) und
- einer Steuereinheit ( CTRL ) zur Übertragung eines Anforderungssignals zum Aufbau einer Wählverbindung zur Übertragung der Video- und Audiosignale über das digitale Netz ( ISDN ) im Falle einer Betätigung der Türsprechanlage sowie zum Empfang von Steuersignalen und zur Übertragung der Steuersignale ohne Unterbrechung der Wählverbindung an wenigstens eine fernsteuerbare Einheit ( UNIT ).

2. Einrichtung ( EIN ) nach Anspruch 1, dadurch gekennzeichnet, daß die Audioeinheit ( AUD1 ) zwei Übertrager und die Videoeinheit ( VID1 ) einen Opto-Koppler beinhaltet.

3. Einrichtung ( EIN ) nach Anspruch 1, dadurch gekennzeichnet, daß die Steuereinheit ( CTRL ) einen Speicher zum Abspeichern von Videobildern und einen Vergleicher zum Vergleich der abgespeicherten Videobilder mit den Videosignalen der Videokamera beinhaltet und daß ein Anforderungssigal nur in Abhängigkeit vom Vergleich übertragbar ist.

4. Einrichtung ( EIN ) nach Anspruch 1, dadurch gekennzeichnet, daß sie eine zweite Videoeinheit ( VID2 ) zur Verbindung mit einer zweiten Videokamera ( CAM ) und einen Umschalter zum Umschalten von der Übertragung der Videosignale von der ersten Videokamera auf die Übertragung der Videosignale von der zweiten Videokamera ( CAM ) ohne Unterbrechung der Wählverbindung beinhaltet.

5. Einrichtung ( EIN ) nach Anspruch 1, dadurch gekennzeichnet, daß sie eine zweite Audioeinheit ( AUD2 ) zur Verbindung mit einer Freisprecheinrichtung und einen Umschalter zum Umschalten von der Übertragung der Audiosignale von der Türsprechanlage auf die Übertragung der Audiosignale von der Freisprecheinrichtung ohne Unterbrechung der Wählverbindung beinhaltet.

6. Einrichtung ( EIN ) nach Anspruch 1, dadurch gekennzeichnet, daß die Steuereinheit ( CTRL ) einen programmierbaren Speicher zum programmierbaren Abspeichern von wenigstens einer Rufnummer beinhaltet, die im Falle einer Betätigung der Türsprechanlage automatisch anwählbar ist.

7. Einrichtung ( EIN ) nach Anspruch 6, dadurch gekennzeichnet, daß die Steuereinheit ( CTRL ) ein Rufnummernfilter beinhaltet, das nur vorgegebene Rufnummern berechtigt über eine Wählverbindung Video- und/oder Audiosignale abzurufen, Steuersignale an die wenigstens eine fernsteuerbare Einheit ( UNIT ) weiterzuleiten und/oder eine Rufnummer einer Rufumleitung zu programmieren.

8. Einrichtung ( EIN ) nach Anspruch 6, dadurch gekennzeichnet, daß über die Wählverbindung die Übertragung und der Empfang der Video- und Audiosignale wenigstens in einem Nutzinformationskanal und der Empfang der Steuersignale in einem Signalisierungskanal erfolgt.

9. Einrichtung ( EIN ) nach Anspruch 1, dadurch gekennzeichnet, daß die Steuereinheit ( CTRL ) einen Speicher zum Abspeichern von Audiosignalen und einen Vergleicher zum Vergleich der abgespeicherten Audiosignale mit den Audiosignalen von der Türsprechanlage beinhaltet und daß ein Anforderungssigal nur in Abhängigkeit vom Vergleich übertragbar ist.

10. Einrichtung ( EIN ) nach Anspruch 1, dadurch gekennzeichnet, daß sie ein ISDN-Bildtelefon oder einen Computer mit ISDN-PC-Adapterkarte zum Aufbau der Wählverbindung beinhaltet.

11. Einrichtung ( EIN ) nach Anspruch 1, dadurch gekennzeichnet, daß die Steuereinheit ( CTRL ) einen Speicher zum Abspeichern der Video- und/oder Audiosignale der Türsprechanlage beinhaltet.
